# EUROPEAN PATENT SPECIFICATION

(11) **EP 4 356 180 B1**
(45) Date of publication and mention of the grant of the patent: **11.02.2026**
(21) Application number: 22761702.4
(22) Date of filing: 29.07.2022
(51) Int. Cl.: G02B 27/00, G02B 27/01

(54) **HEAD-MOUNTED DISPLAY**
KOPFMONTIERTE ANZEIGESYSTEM
SYSTÈME D'AFFICHAGE MONTÉ SUR LA TÊTE

(30) Priority: 06.08.2021 US 202163230625 P
(43) Date of publication of application: 24.04.2024
(73) Proprietor: Apple Inc., Cupertino, CA 95014 (US)
(72) Inventor: SLUPEIKS, Jason L, Cupertino, CA 95014 (US)
(74) Representative: Froud, Christopher Andrew
(86) International application number: PCT/US2022/038949
(87) International publication number: WO 2023/014617

(56) References cited:
- US-A1- 2019 333 480
- US-A1- 2020 064 635

## Description

### Field

This relates generally to electronic devices, and, more particularly, to electronic devices such as head-mounted devices.

### Background

Electronic devices such as head-mounted devices may have components such as displays that are used in providing visual content to users.

US 2020/0064635 A1 discloses a head-mounted device that may have a display with first and second pixel arrays that display content for a user. A head-mounted support structure in the device supports the pixel arrays on the head of the user. A left positioner may be used to position a left lens module that includes a left lens and the first pixel array. A right positioner may be used to position a right lens module that includes a right lens and the second pixel array. Sensing circuitry such as proximity sensing circuitry may be used to detect relative positions between the left and right lens modules and facing surfaces of a user's nose while the user is wearing the head-mounted support structure. Control circuitry may adjust the positions of the left and right lens modules using interpupillary distance information for the user and using information from the sensing circuitry.

US 2019/0333480 A1 discloses systems and methods for viewing live data and virtual data with the optical head mounted display unit. In some embodiments, the system comprises an optical head mounted display unit configured to be registered or calibrated in relationship to at least one of a user's head, face, eye or pupil; a computer processor configured for measuring movement of the optical head mount display unit in relationship to the at least one of the user's head, face, eye or pupil; and a means for adjusting one or more of the position, orientation, or alignment of the display of the optical head mounted display unit to adjust or compensate for the movement of the optical head mounted display unit in relationship to the at least one of the user's head, face, eye or pupil.

### Summary

The present invention relates to a head-mounted device as disclosed in claim 1. A head-mounted device may have optical modules mounted in a head-mounted housing. Each optical module, which may sometimes be referred to as an optical assembly, may have a display configured to display an image in a respective eye box through a lens. The optical modules may be slidably coupled to guide rails. Left and right positioners may be used to adjust the locations of the optical modules along the guide rails.

Each optical module may have one or more cameras and/or other sensors. The optical module cameras may be used to capture eye images from the eye boxes to measure eye characteristics such as eye opening angle, eye lid opening size, cornea diameter, and interpupillary distance. The eye characteristics may be measured at different times during the use of the head mounted device (e.g., at a first time such as when a user registers with the device and a second time that is later than the first time).

Because the user's eye characteristics tend to remain constant over time, the user's eye characteristics can be used as reference points to detect misalignment in the optical modules. Measured eye characteristics may be used in evaluating whether a device has experienced changes in optical module position over time. For example, measured changes in the eye opening angle can be used in determine whether an optical module has become skewed relative to its original orientation.

If desired, the head-mounted device may have optical module position sensors based on electrode arrays that are contacted by optical module electrodes on the optical modules (e.g., when the optical modules are slid along the guide rails to the limits of their travel). Position measurements with these sensors can be used in determining whether optical module positions have shifted.

Control circuitry can perform image warping operations to ensure that displayed images are compensated for measured changes in optical module position (e.g., misalignment detected using captured images and/or misalignment detected using electrode array optical module position sensors).

### Brief Description of the Drawings

FIG. 1 is a schematic diagram of an illustrative system with a head-mounted device in accordance with an embodiment.
FIG. 2 is a top view of an illustrative head-mounted device in accordance with an embodiment.
FIG. 3 is a front view of an illustrative set of eyes being measured in eye boxes by optical module sensors in accordance with an embodiment.
FIG. 4 is a rear view of an illustrative head-mounted device with optical module position sensors in accordance with an embodiment.
FIG. 5 is a plan view of an illustrative optical module position sensor electrode array in accordance with an embodiment.
FIG. 6 is a flow chart of illustrative operations associated with using an electronic device in accordance with an embodiment.

### Detailed Description

Electronic devices such as head-mounted devices may include displays for presenting users with visual content. In an illustrative arrangement, a head-mounted device has displays and lenses mounted in left and right optical modules. The left and right optical modules provide left and right images to left and right eye boxes for viewing by a user's left and right eyes, respectively. The distance between the left and right optical modules may be adjusted to accommodate different user interpupillary distances.

There is a risk that the optical modules in a head-mounted device may become misaligned when a head-mounted device is exposed to excessive stress or abuse such as when a head-mounted device experiences an undesired drop event. To ensure that images are provided satisfactorily to the eye boxes in which the user's eyes are located, the head-mounted device may gather eye images and/or other sensor data and may process this sensor data to detect changes over time. If changes are detected, images may be warped and/or otherwise adjusted to compensate for any detected changes. If, as an example, it is determined that a left eye image has become tilted by 1° in a clockwise direction due to optical module tilt induced by a drop event, control circuitry in the device may adjust image data being supplied to the left display so that the left image is digitally rotated by a compensating amount (e.g., 1° in the clockwise direction in this example). By digitally compensating for detected misalignment conditions in the optical modules, satisfactorily aligned images may be presented to the user.

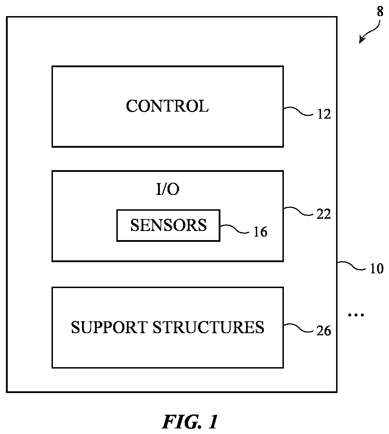

A schematic diagram of an illustrative system that includes a head-mounted device is shown in FIG. 1. As shown in FIG. 1, system 8 may include one or more electronic devices such as electronic device 10. The electronic devices of system 8 may include computers, cellular telephones, head-mounted devices, wristwatch devices, and other electronic devices. Configurations in which electronic device 10 is a head-mounted device are sometimes described herein as an example.

As shown in FIG. 1, electronic devices such as electronic device 10 may have control circuitry 12. Control circuitry 12 may include storage and processing circuitry for controlling the operation of device 10. Circuitry 12 may include storage such as hard disk drive storage, nonvolatile memory (e.g., electrically-programmable-read-only memory configured to form a solid-state drive), volatile memory (e.g., static or dynamic random-access-memory), etc. Processing circuitry in control circuitry 12 may be based on one or more microprocessors, microcontrollers, digital signal processors, baseband processors, power management units, audio chips, graphics processing units, application specific integrated circuits, and other integrated circuits. Software code may be stored on storage in circuitry 12 and run on processing circuitry in circuitry 12 to implement control operations for device 10 (e.g., data gathering operations, operations involving the adjustment of the components of device 10 using control signals, etc.). Control circuitry 12 may include wired and wireless communications circuitry. For example, control circuitry 12 may include radio-frequency transceiver circuitry such as cellular telephone transceiver circuitry, wireless local area network transceiver circuitry (e.g., WiFi^{®} circuitry), millimeter wave transceiver circuitry, and/or other wireless communications circuitry.

During operation, the communications circuitry of the devices in system 8 (e.g., the communications circuitry of control circuitry 12 of device 10), may be used to support communication between the electronic devices. For example, one electronic device may transmit video data, audio data, and/or other data to another electronic device in system 8. Electronic devices in system 8 may use wired and/or wireless communications circuitry to communicate through one or more communications networks (e.g., the internet, local area networks, etc.). The communications circuitry may be used to allow data to be received by device 10 from external equipment (e.g., a tethered computer, a portable device such as a handheld device or laptop computer, online computing equipment such as a remote server or other remote computing equipment, or other electrical equipment) and/or to provide data to external equipment.

Device 10 may include input-output devices 22. Input-output devices 22 may be used to allow a user to provide device 10 with user input. Input-output devices 22 may also be used to gather information on the environment in which device 10 is operating. Output components in devices 22 may allow device 10 to provide a user with output and may be used to communicate with external electrical equipment.

Input-output devices 22 may include one or more displays. In some configurations, device 10 includes left and right display devices. These displays devices may include scanning mirror display devices or other image projectors, liquid-crystal-on-silicon display devices, digital mirror devices, or other reflective display devices, left and right display panels based on light-emitting diode pixel arrays such as organic light-emitting display panels or display devices based on pixel arrays formed from crystalline semiconductor light-emitting diode dies, liquid crystal display panels, and/or or other left and right display devices that provide images to left and right eye boxes for viewing by the user's left and right eyes, respectively.

During operation, control circuitry 12 uses displays to provide visual content for a user of device 10 (e.g., control circuitry 12 provides the displays with digital image data). The content that is presented on the displays may sometimes be referred to as display image content, display images, computer-generated content, computer-generated images, virtual content, virtual images, or virtual objects.

Display images may be displayed in the absence of real-world content or may be combined with real-world images. In some configurations, real-world content may be captured by a camera (e.g., a forward-facing camera, sometimes referred to as a front-facing camera) so that computer-generated content may be electronically overlaid on portions of the real-world image (e.g., when device 10 is a pair of virtual reality goggles with an opaque display). In other configurations, an optical combining system may be used to allow computer-generated content to be optically overlaid on top of a real-world image. With this approach, device 10 has an optical system that provides display images to a user through a waveguide having a holographic output coupler or other optical coupler while allowing the user to view real-world images through the waveguide and optical coupler. Illustrative arrangements for device 10 are sometimes described herein in which device 10 does not include such optical couplers (e.g., illustrative arrangements for device 10 are described in which left and right optical modules that are used in displaying computer-generated content and/or, if desired, pass-through video from forward facing cameras).

Input-output circuitry 22 may include sensors 16. Sensors 16 may include, for example, three-dimensional sensors (e.g., three-dimensional image sensors such as structured light sensors that emit beams of light and that use two-dimensional digital image sensors to gather image data for three-dimensional images from light spots that are produced when a target is illuminated by the beams of light, binocular three-dimensional image sensors that gather three-dimensional images using two or more cameras in a binocular imaging arrangement, three-dimensional lidar (light detection and ranging) sensors, three-dimensional radio-frequency sensors, or other sensors that gather three-dimensional image data), cameras (e.g., infrared and/or visible digital image sensors), gaze tracking sensors (e.g., a gaze tracking system based on an image sensor and, if desired, a light source that emits one or more beams of light that are tracked using the image sensor after reflecting from a user's eyes), touch sensors, capacitive proximity sensors, light-based (optical) proximity sensors, other proximity sensors, force sensors, sensors such as contact sensors based on switches, gas sensors, pressure sensors, moisture sensors, magnetic sensors, audio sensors (microphones), ambient light sensors, microphones for gathering voice commands and other audio input, sensors that are configured to gather information on motion, position, and/or orientation (e.g., accelerometers, gyroscopes, compasses, and/or inertial measurement units that include all of these sensors or a subset of one or two of these sensors), and/or other sensors. To help determine whether components such as optical modules in device 10 should be compensated for misalignment, sensors 22 may include eye sensors such as gaze tracking sensors, visual and/or infrared image sensors (cameras) that face the eyes of a user to capture eye images, optical module misalignment (tilt) sensors (sometimes referred to as optical module position sensors) based on electrode arrays that can be contacted by optical module electrodes, and/or other sensors that gather information indicative of whether the optical modules of device 10 have changed position. If changes in optical module position (and therefore display position relative) are detected, the control circuitry of device 10 can adjust image data being provided to the displays so that the left and right images produced by the left and right displays of device 10 are aligned with the user's right and left eyes (when the user's right and left eyes are located in right and left eye boxes).

To allow a user to control device 10, user input and other information may be gathered using sensors and other input devices in input-output devices 22. If desired, input-output devices 22 may include devices such as haptic output devices (e.g., vibrating components), light-emitting diodes and other light sources, speakers such as ear speakers for producing audio output, circuits for receiving wireless power, circuits for transmitting power wirelessly to other devices, batteries and other energy storage devices (e.g., capacitors), joysticks, buttons, and/or other components.

Electronic device 10 may have housing structures (e.g., housing walls, straps, etc.), as shown by illustrative head-mounted support structures 26 of FIG. 1. In configurations in which electronic device 10 is a head-mounted device (e.g., a pair of glasses, goggles, a helmet, a hat, etc.), support structures 26 may include head-mounted support structures (e.g., a helmet housing, a headband, temples and other glasses frame structures in a pair of eyeglasses, goggle housing structures, and/or other head-mounted support structures). The head-mounted support structures, which may sometimes be referred to as a head-mounted support, may be configured to be worn on a head of a user during operation of device 10 and may support displays, sensors 16, other input-output devices 22, and control circuitry 12.

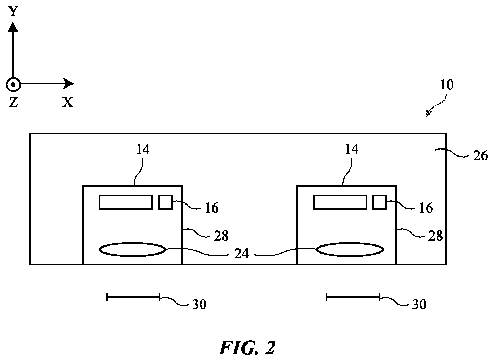

FIG. 2 is a top view of electronic device 10 in an illustrative configuration in which electronic device 10 is a head-mounted device. As shown in FIG. 2, electronic device 10 may include head-mounted support structure 26 to house the components of device 10 and to support device 10 on a user's head. Support structure 26 may include, for example, structures that form housing walls and other structures at the front of device 10 (e.g., sometimes referred to as a head-mounted device housing or main unit) and additional structures such as headbands or other straps, temples, or other supplemental support structures (sometimes referred to as housing structures) that help to hold the main unit and the components in the main unit on a user's face so that the user's eyes are located within eye boxes 30.

During operation of device 10, images are presented to a user's eyes in eye boxes 30. Eye boxes 30 include a left eye box that receives a left image and a right eye box that receives a right image. Device 10 may include a left display system with a left display 14 that presents the left image to the left eye box and a right display system with a right display 14 that presents the right image to the right eye box. In an illustrative configuration, each display (sometimes referred to as a pixel array) is mounted with an associated lens 24 in a respective optical module 28 (e.g., in a lens barrel formed from metal, polymer, and/or other materials or other suitable optical module housing, sometimes referred to as an optical assembly or support structure). Components such as sensors 16 (e.g., eye sensors such as visible light cameras and/or infrared cameras that capture images of a user's eyes when the user's eyes are located in eye boxes 30, gaze tracking sensors, and/or other eye sensing components) may also be mounted in optical modules (optical assemblies) 28 (e.g., in the same optical module housings as the displays at locations where these sensors can operate through lenses 24 and/or where these sensors can bypass lenses 24 when gathering data from eye boxes 30). If desired, device 10 may also contain sensors 16 mounted at other locations in device 10.

As shown in FIG. 2, the left and right optical modules 28 of device 10 and the displays and sensors 16 mounted in the housings of these modules may face the rear of device 10 so that respective left and right images are supplied to eye boxes 30 and so that left and right eye measurements can be gathered from the eye boxes. The images presented to eye boxes 30 may include computer-generated content (e.g., virtual images, sometime referred to as virtual content) and may include pass-through images from forward-facing cameras (sometimes referred to as real-world content).

The characteristics of a user's eyes tend not to change over time. For example, a user's interpupillary distance tends to remain constant. Similarly, a user's cornea diameter, eye opening shape, eye opening angle, and other eye attributes tend to remain constant. As a result, these features of a user's face can be used as reference points by device 10. During a registration process when device 10 is initially being associated with a new user or at another suitable time, device 10 may measure the user's eye characteristics and may store these measurements. At one or more later times during use of device 10, device 10 can remeasure the user's eye characteristics. If any changes are detected, it can be assumed that the positions of the optical modules have drifted (e.g., due to a drop event or other excessive stress) and compensating image processing techniques (e.g., compensating image warping) can be performed on the images being displayed by device 10 to compensate for this detected misalignment. For example, control circuitry 12 can apply a geometrical transform to the image data being supplied to displays 14 to compensate for image distortion (e.g., keystoning, tilt, image size shrinkage or enlargement, image location shift, etc.) due to shifts and/or rotations of displays 14 relative to their nominal positions). Eye measurements and updates to any compensating image transforms that are being used by device 10 can be made each time device 10 is powered up (and/or powered down), can be made in response to user input, can be made periodically (e.g., at regular predetermined intervals), may be made in response to detecting a drop event with an accelerometer in sensors 16 or in response to detecting other high-stress conditions, and/or may be made in response to detecting satisfaction of other suitable calibration criteria.

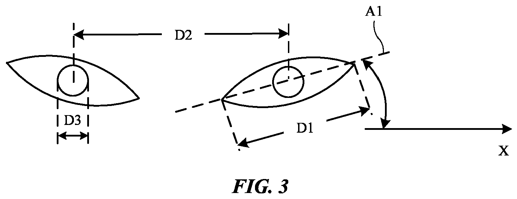

In an illustrative configuration, image sensors 16 (cameras operating at infrared and/or visible wavelengths) may be **used** to capture eye images for control circuitry 12 to process. The image sensors may be mounted in respective left and right optical modules 28 and therefore may be used to gauge whether there has been any movement of modules 28 with respect to the user's eyes. The eye images may be captured and stored as image data and/or may be stored after image processing has been performed to extract eye characteristics. Examples of eye characteristics that may be measured using sensors 16 are shown in FIG. 3 and include interpupillary distance D2 (sometimes referred to as eye spacing), eye opening angle A1, eye lid opening size D1, and cornea diameter D3. Eye images and/or other eye measurements may reveal whether an eye has shifted is apparent position (e.g., by translating in X, Y, and/or Z dimensions) and/or whether there is eye image distortion (e.g., keystoning or tilt) indicative of rotation about X, Y, and/or Z axes). Because the image sensors are mounted in the same optical modules as displays 14, it can be assumed that any shift and/or rotation of the apparent positions of the eyes (which are assumed to be in stable locations on the user's face) is a result of an undesired shift and/or rotation of the real-lift positions of the optical modules (and their displays and lenses). If, as an example, it is measured that a user's left eye has moved by 1 mm horizontally, it can be concluded that, in actuality, the optical module containing the eye sensor that made that measurement has shifted by 1 mm horizontally. To compensate for this measured misalignment of the optical module (which will not only affect the images detected by the image sensor or other eye sensor but also the images displayed by the display of that optical module), control circuitry 12 can digitally process the images provided to the display of the optical module (e.g., by applying an image warping to the image data being provided to the display so that the image is digitally shifted in position by 1 mm horizontally to compensate for the 1 mm of horizontal detected movement of the optical module). In this way, the user's eyes serve as known reference points, which allows the images being presented to the user to be digitally processed to compensate for optical module misalignment detected by measuring the eye characteristics of the user's eyes.

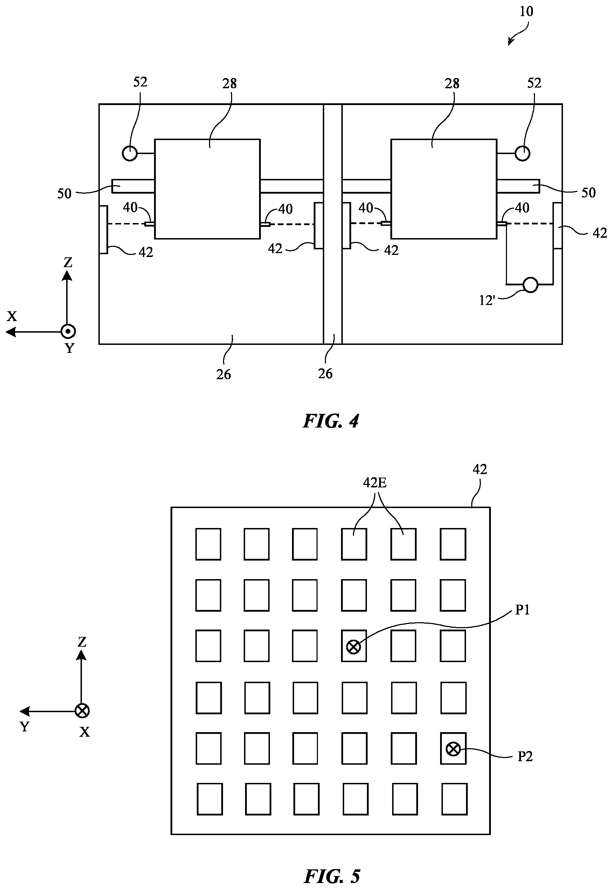

FIG. 4 shows additional sensors that may be used in maintaining satisfactory image alignment in device 10. In the example of FIG. 4, each optical module has one or more left electrodes 40 located on the left of the optical module and one or more right electrodes 40 located on the right of the optical module. These optical module electrodes, which may sometimes be referred to as pins or optical module pins, are aligned with respective target electrode arrays 42 supported by adjacent portions of housing 26 of device 20.

Electrode arrays 42, which may sometimes be referred to as optical module position sensor electrode arrays, contain arrays of metal patches, concentric metal rings, and/or other arrays of electrodes 42E, as shown in FIG. 5. As shown by measurement circuitry 12', control circuitry 12 may be used to measure the resistance between each electrode 42E in a given electrode array 42 and a corresponding optical module electrode (pin) 40. Optical modules 28 may slide along one or more guide rails such as guide rails 50 under control of electrically adjusted positioner 52, which are controlled by control circuitry 12. When it is desired to measure the alignment of optical modules 28, optical modules 28 are moved either inwardly towards their inner travel limit (so that inwardly facing optical module electrodes 40 contact associated arrays 42 at the center of device 10) or are moved outwardly away from each other towards their outer travel limit (so that outwardly facing optical module electrodes 40 contact associated arrays 42 at the left and right edges of housing 26).

Using control circuitry to measure the resistances between each of electrodes 42E in a given array 42 and the associated optical module electrode 40 that has contacted that array 42, device 10 can determine which of the electrodes 42E has shorted to electrode 40. In this way, changes in position (e.g., misalignment) of modules 28 can be measured. Consider, as an example, a scenario in which there is one optical module electrode 40 on an optical module. Initially, when device 10 is initially set up and is properly aligned, optical module electrode 40 will contact an electrode 42E at position P1 of FIG. 5 (as an example). Following a drop event, the optical module moves, causing subsequent measurements with the position sensor formed using array 42 and electrode 40 to reveal that an electrode 42E at position P2 is contacted by electrode 40. The amount of misalignment of optical module 28 represented by the measured movement of electrode 40 from position P1 to position P2 on array 42 is then calculated by control circuitry 12 and corresponding compensating digital image warping operations are performed on the image data being supplied to the display in the misaligned optical module. Additional information on optical module misalignment may be gathered by using two or three electrodes 40 on each side of each optical module. If, as an example, there are two optical module electrodes 40 in contact with the electrodes of array 42, two corresponding positions P1 will be measured by the array and their locations will reflect any rotations of optical modules 28 about the X axis.

Electrode array 42 may have electrodes 42E arranged in rows and columns and/or may have other suitable electrode layouts (e.g., configurations with ring-shaped electrodes, configurations with radially extending electrode patterns, etc.). The electrode pattern of illustrative position sensor electrode array 42 of FIG. 5 is merely illustrative. The circuitry of FIG. 4 (e.g., resistance measurement circuitry 12' in control circuitry 12, position sensor electrode arrays 42 and their electrodes 42E, and optical module electrodes 40) form position sensors (sometimes referred to as optical module position sensors or optical module alignment sensors) that can detect optical module movements (e.g., movements due to drop events, etc.). If desired, optical module alignment measurements made using this measurement circuitry may be used in conjunction with optical module alignment measurement made using a user's eyes as references (e.g., eye measurement data from optical modules cameras and optical module position sensor measurements from arrays 42 may be combined in a sensor fusion arrangement to help enhance measurement accuracy). In general, control circuitry 12 can adjust the displayed images from displays 14 based on optical module camera measurements, optical module position sensor electrode array measurements, and/or other sensor data.

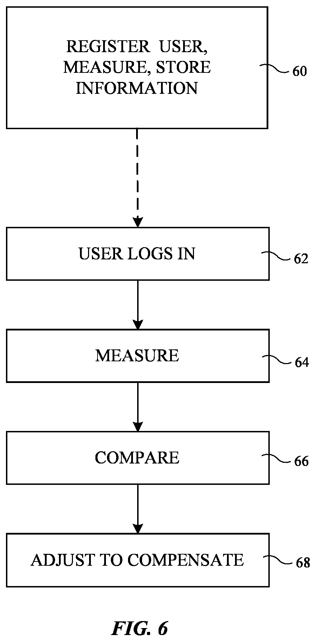

FIG. 6 is a flow chart of illustrative operations associated with using device 10.

During the operations of block 60, a user may register with device 10. For example, a user may provide a username and password, biometric credentials, and/or other identifying information to device 10. During this process, the initial positions of optical modules are assumed to be correct (e.g., modules 28 are assumed to have been manufactured within normal tolerances so that optical modules 28 are aligned satisfactorily). Accordingly, eye cameras and/or other eye sensors may be used to measure the user's eyes for later use as reference points in determining whether modules 28 have moved. Eye measurements may include user-specific characteristics such as cornea size, eye lid opening size, interpupillary distance, eye opening angle, etc. and may be stored as images and/or may be stored as processed data (see, e.g., the measured values of D1, D2, D2, and A1 of FIG. 3 which may be extracted from the eye images using image processing). In addition to making measurements of the eyes to use as a reference, device 10 can direct positioners 52 (FIG. 4) to move modules 28 to their innermost and outermost positions along guide rails 50 while using electrode arrays 42 and electrodes 40 as position sensors to measure the positions of optical modules 28 (e.g., the alignment of modules 28) when modules 28 are known to be aligned satisfactorily.

At one or more later times, after device 10 has been used and potentially exposed to high-stress conditions and abuse such as drop events, device 10 can be recalibrated to compensate for any changes in optical module alignment. In particular, during the operations of block 62, the user may supply the user's credentials to identify the user to device 10 (e.g., the user may log into device 10). Based on the known identity of the user, device 10 can retrieve the user's specific eye information (corresponding to the measured characteristics of the user's eyes when optical modules 28 are properly aligned). The current characteristics of the user's eyes may then be measured during the operations of block 64 (e.g., using image sensors to capture eye images, etc.). If desired, optical module alignment can also be assessed by using optical module position sensors such as electrode arrays 42 and electrodes 40.

During the operations of block 66, the current measured alignment (position) of modules 28 is compared to the previously measured initial alignment (position) of modules 28. User eye characteristic measurements and/or optical module position sensor measurements with arrays 42 may be used. If no deviations are detected, image data may be provided to displays 14 of modules 28 without alteration. If, however, changes in alignment (position) are detected (e.g., if misalignment is detected), a compensating amount of image warping or other digital image processing may be applied to the image data for the left and right optical modules during the operations of block 68. In this way, changes in module position (e.g., shifts along the X, Y, and/or Z axes and/or rotations about the X, Y, and/or Z axes) can be compensated (e.g., by warping the images being displayed equally and oppositely from the image distortion experienced due to the measured changes in alignment). As just one example, if a rotation of angle A1 by 2° in the image of the user's left eye is measured, the image data for the left display can be correspondingly rotated by 2° to correct for this misalignment in the optical module. In this way, the images provided to the user's eyes will remain aligned, even if the positions of the optical modules change.

In some embodiments, sensors may gather personal user information. To ensure that the privacy of users is preserved, all applicable privacy regulations should be met or exceeded and best practices for handling of personal user information should be followed. Users may be permitted to control the use of their personal information in accordance with their preferences.

In accordance with an embodiment, a head-mounted device is provided that includes a head-mounted support and optical assemblies each of which has a lens through which an image is visible from an associated eye box, a sensor configured to measure eye characteristics in the associated eye box, and a display that adjusts the image based on the measured eye characteristics.

In accordance with another embodiment, the sensor includes an image sensor configured to capture eye images, the measured eye characteristics are obtained from the captured eye images, and the display adjusts the image based on the eye characteristics from the eye images to compensate for changes in optical assembly alignment of the optical assemblies.

In accordance with another embodiment, the sensor includes an image sensor configured to capture eye images, the measured eye characteristics are obtained from the captured eye images and include eye opening angle and cornea diameter.

In accordance with another embodiment, sensor includes an image sensor configured to measure changes in alignment of the optical assemblies by comparing eye information gathered when the optical assemblies are aligned correctly to eye information gathered when the optical assemblies are misaligned.

In accordance with another embodiment, the display is configured to warp the image to compensate for the measured changes in alignment.

In accordance with another embodiment, the measured changes in alignment include optical assembly rotation away from a desired orientation and the display is configured to warp the images to compensate for the optical assembly rotation.

In accordance with another embodiment, the display is configured to warp the image to rotate the image by an equal and opposite amount from the optical assembly rotation away from the desired orientation.

In accordance with another embodiment, the optical assemblies each include an optical assembly electrode configured to make electrical contact with an electrode in a respective optical assembly position sensor electrode array.

In accordance with another embodiment, the optical assemblies are slidably coupled to guide rails and the head-mounted device includes positioners configured to move the optical assemblies so that the optical assembly electrodes make contact with the position sensor electrode arrays.

In accordance with another embodiment, the display is configured to adjust the image based on measurements from the position sensor electrode arrays.

In accordance with another embodiment, the sensor includes an image sensor, the measured eye characteristics include eye opening angle, and the display is configured to use the eye opening angle in warping the image by comparing a currently measured version of the eye opening angle to a previously measured version of the eye opening angle.

In accordance with an embodiment, a head-mounted device is provided that includes a head-mounted support; optical assemblies mounted in the head-mounted support; and optical assembly position sensors having arrays of electrodes, the optical assembly position sensors are configured to measure changes in alignment of the optical assemblies.

In accordance with another embodiment, the optical assemblies have respective displays and respective left and right lenses through which left and right images from the left and right displays are provided respectively to left and right eye boxes.

In accordance with another embodiment, the optical assembly position sensors include optical assembly electrodes configured to make contact with electrodes in the arrays of electrodes.

In accordance with another embodiment, the optical assemblies include a left optical assembly and a right optical assembly and the optical assembly electrodes include at least a left optical assembly electrode on the left optical assembly and a right optical assembly electrode on the right optical assembly, the head-mounted device includes a left positioner configured to move the left optical assembly so that the left optical assembly electrode contacts a first of the arrays of electrodes to make a left optical assembly position measurement and a right positioner configured to move the right optical assembly so that the right optical assembly electrode contacts a second of the arrays of electrodes to make a right optical assembly position measurement.

In accordance with another embodiment, the displays are configured to perform image warping operations.

In accordance with another embodiment, the displays are configured to perform image warping operations based on the measured changes in alignment.

In accordance with another embodiment, the head-mounted device includes a left camera in a first of the optical assemblies that is configured to capture a left eye image and a right camera in a second of the optical assemblies that is configured to capture a right eye image.

In accordance with another embodiment, the head-mounted device includes a left camera in a first of the optical assemblies that is configured to capture a left eye image and a right camera in a second of the optical assemblies that is configured to capture a right eye image the left and right displays are configured to align the left and right images based the measured changes in alignment and based on eye characteristics obtained from the captured left and right eye images.

In accordance with an embodiment, a head-mounted device is provided that includes a head-mounted support and left and right optical assemblies in the head-mounted support, the left and right optical assemblies have respective left and right lenses through which respective left and right images are provided to left and right eye boxes, left and right cameras configured to respectively capture a left eye image from the left eye box and a right eye image from the right eye box to measure corresponding left and right eye characteristics, and left and right displays configured to adjust the left and right images based on a comparison between the left and right eye characteristics measured at a first time and the left and right eye characteristics measured at a second time.

The foregoing is merely illustrative and various modifications can be made to the described embodiments within the scope of the present invention defined by the appended claims.

## Claims

1. A head-mounted device (10), comprising:
a head-mounted support (26); and
optical assemblies (28) each of which has a lens (24) through which an image is visible from an associated eye box (30), a sensor (16) configured to measure eye characteristics in the associated eye box (30), and a display (14) configured to display the image for the associated eye box (30), wherein the head-mounted device (10) is configured so that the displayed image is adjusted in order to compensate for an optical assembly misalignment determined by comparing a current alignment of a corresponding one of the optical assemblies (28) based on the eye characteristics currently measured by the sensor (16) to an initial alignment of the corresponding one of the optical assemblies (28) based on the eye characteristics previously measured by the sensor (16).

2. The head-mounted device (10) defined in claim 1 wherein the sensor (16) comprises an image sensor configured to capture eye images, wherein the measured eye characteristics are obtained from the captured eye images, and wherein the displayed image is adjusted based on the eye characteristics from the eye images to compensate for the optical assembly misalignment.

3. The head-mounted device (10) defined in claim 1 wherein the sensor (16) comprises an image sensor configured to capture eye images and wherein the measured eye characteristics are obtained from the captured eye images and include eye opening angle and cornea diameter.

4. The head-mounted device (10) defined in claim 1 wherein sensor (16) comprises an image sensor configured to measure changes in alignment of the optical assemblies (28) by comparing eye information gathered when the optical assemblies (28) are aligned correctly to eye information gathered when the optical assemblies (28) are misaligned.

5. The head-mounted device (10) defined in claim 4 wherein the displayed image is warped to compensate for the measured changes in alignment.

6. The head-mounted device (10) defined in claim 4 wherein the measured changes in alignment include optical assembly rotation away from a desired orientation and wherein the displayed image is warped to compensate for the optical assembly rotation.

7. The head-mounted device (10) defined in claim 6 wherein the displayed image is warped to rotate the image by an equal and opposite amount from the optical assembly rotation away from the desired orientation.

8. The head-mounted device (10) defined in claim 1 wherein the optical assemblies (28) each comprise an optical assembly electrode (40) configured to make electrical contact with an electrode in a respective optical assembly position sensor electrode array (42).

9. The head-mounted device (10) defined in claim 8 wherein the optical assemblies (28) are slidably coupled to guide rails (50) and wherein the head-mounted device (10) comprises positioners (52) configured to move the optical assemblies (28) so that the optical assembly electrodes (40) make contact with the position sensor electrode arrays (42).

10. The head-mounted device (10) defined in claim 9 wherein the displayed image is adjusted based on measurements from the position sensor electrode arrays (42).

11. The head-mounted device (10) defined in claim 1 wherein the sensor (16) comprises an image sensor, wherein the measured eye characteristics include eye opening angle, and wherein the displayed image is warped using the eye opening angle by comparing a currently measured version of the eye opening angle to a previously measured version of the eye opening angle.

12. The head-mounted device (10) defined in claim 1 further comprising:
control circuitry (12) configured to provide image data of the adjusted image to the display (14).

13. The head-mounted device (10) defined in claim 1 further comprising:
control circuitry (12) configured to adjust image data corresponding to the displayed image.

14. The head-mounted device (10) defined in claim 13 wherein the control circuitry (12) is configured to compare the current alignment of the corresponding one of the optical assemblies (28) to the initial alignment of the corresponding one of the optical assemblies (28) to determine the optical assembly misalignment and wherein the control circuitry (12) is configured to adjust the image data corresponding to the displayed image in order to compensate for the determined optical assembly misalignment.

15. The head-mounted device (10) defined in claim 1 wherein the display (14) is configured to receive the adjusted image for display.

## Patentansprüche

1. Kopfmontierte Vorrichtung (10), umfassend: eine kopfmontierte Halterung (26); und optische Baugruppen (28), von denen jede eine Linse (24), durch die ein Bild von einer zugeordneten Augenbox (30) sichtbar ist, einen Sensor (16), der konfiguriert ist, um Augeneigenschaften in der zugeordneten Augenbox (30) zu messen, und eine Anzeige (14), die konfiguriert ist, um das Bild für die zugeordnete Augenbox (30) anzuzeigen, aufweist, wobei die kopfmontierte Vorrichtung (10) so konfiguriert ist, dass das angezeigte Bild angepasst wird, um eine Fehlausrichtung der optischen Baugruppe zu kompensieren, die durch Vergleichen einer aktuellen Ausrichtung einer entsprechenden der optischen Baugruppen (28) basierend auf den Augeneigenschaften, die aktuell durch den Sensor (16) gemessen werden, mit einer anfänglichen Ausrichtung der entsprechenden der optischen Baugruppen (28) basierend auf den Augeneigenschaften, die zuvor durch den Sensor (16) gemessen werden, bestimmt wird.

2. Kopfmontierte Vorrichtung (10) nach Anspruch 1, wobei der Sensor (16) einen Bildsensor umfasst, der konfiguriert ist, um Augenbilder aufzunehmen, wobei die gemessenen Augeneigenschaften aus den aufgenommenen Augenbildern erhalten werden und wobei das angezeigte Bild basierend auf den Augeneigenschaften aus den Augenbildern angepasst wird, um die Fehlausrichtung der optischen Baugruppe zu kompensieren.

3. Kopfmontierte Vorrichtung (10) nach Anspruch 1, wobei der Sensor (16) einen Bildsensor umfasst, der konfiguriert ist, um Augenbilder aufzunehmen, und wobei die gemessenen Augeneigenschaften aus den aufgenommenen Augenbildern erhalten werden und Augenöffnungswinkel und Hornhautdurchmesser beinhalten.

4. Kopfmontierte Vorrichtung (10) nach Anspruch 1, wobei der Sensor (16) einen Bildsensor umfasst, der konfiguriert ist, um Änderungen der Ausrichtung der optischen Baugruppen (28) durch Vergleichen von Augeninformation, die gesammelt wird, wenn die optischen Baugruppen (28) korrekt ausgerichtet sind, mit Augeninformation, die gesammelt wird, wenn die optischen Baugruppen (28) fehlausgerichtet sind, zu messen.

5. Kopfmontierte Vorrichtung (10) nach Anspruch 4, wobei das angezeigte Bild verzerrt ist, um die gemessenen Änderungen der Ausrichtung zu kompensieren.

6. Kopfmontierte Vorrichtung (10) nach Anspruch 4, wobei die gemessenen Änderungen der Ausrichtung eine Drehung der optischen Baugruppe weg von einer gewünschten Ausrichtung beinhalten und wobei das angezeigte Bild verzerrt ist, um die Drehung der optischen Baugruppe zu kompensieren.

7. Kopfmontierte Vorrichtung (10) nach Anspruch 6, wobei das angezeigte Bild verzerrt ist, um das Bild um einen gleichen und entgegengesetzten Betrag von der Drehung der optischen Baugruppe weg von der gewünschten Ausrichtung zu drehen.

8. Kopfmontierte Vorrichtung (10) nach Anspruch 1, wobei die optischen Baugruppen (28) jeweils eine optische Baugruppenelektrode (40) umfassen, die konfiguriert ist, um elektrischen Kontakt mit einer Elektrode in einer jeweiligen optischen Baugruppenpositionssensorelektrodenanordnung (42) herzustellen.

9. Kopfmontierte Vorrichtung (10) nach Anspruch 8, wobei die optischen Baugruppen (28) verschiebbar mit Führungsschienen (50) gekoppelt sind und wobei die kopfmontierte Vorrichtung (10) Positionierer (52) umfasst, die konfiguriert sind, um die optischen Baugruppen (28) zu bewegen, so dass die optischen Baugruppenelektroden (40) Kontakt mit den Positionssensorelektrodenanordnungen (42) herstellen.

10. Kopfmontierte Vorrichtung (10) nach Anspruch 9, wobei das angezeigte Bild basierend auf Messungen von den Positionssensorelektrodenanordnungen (42) angepasst wird.

11. Kopfmontierte Vorrichtung (10) nach Anspruch 1, wobei der Sensor (16) einen Bildsensor umfasst, wobei die gemessenen Augeneigenschaften Augenöffnungswinkel beinhalten und wobei das angezeigte Bild unter Verwendung des Augenöffnungswinkels durch Vergleichen einer aktuell gemessenen Version des Augenöffnungswinkels mit einer zuvor gemessenen Version des Augenöffnungswinkels verzerrt ist.

12. Kopfmontierte Vorrichtung (10) nach Anspruch 1, ferner umfassend: eine Steuerschaltung (12), die konfiguriert ist, um Bilddaten des angepassten Bilds an die Anzeige (14) bereitzustellen.

13. Kopfmontierte Vorrichtung (10) nach Anspruch 1, ferner umfassend: eine Steuerschaltung (12), die konfiguriert ist, um Bilddaten, die dem angezeigten Bild entsprechen, anzupassen.

14. Kopfmontierte Vorrichtung (10) nach Anspruch 13, wobei die Steuerschaltung (12) konfiguriert ist, um die aktuelle Ausrichtung der entsprechenden der optischen Baugruppen (28) mit der anfänglichen Ausrichtung der entsprechenden der optischen Baugruppen (28) zu vergleichen, um die Fehlausrichtung der optischen Baugruppe zu bestimmen, und wobei die Steuerschaltung (12) konfiguriert ist, um die Bilddaten, die dem angezeigten Bild entsprechen, anzupassen, um die bestimmte Fehlausrichtung der optischen Baugruppe zu kompensieren.

15. Kopfmontierte Vorrichtung (10) nach Anspruch 1, wobei die Anzeige (14) konfiguriert ist, um das angepasste Bild zur Anzeige zu empfangen.

## Revendications

1. Un dispositif monté sur la tête (10), comprenant :
un support monté sur la tête (26) ; et
des blocs optiques (28) dont chacun possède une lentille (24) au travers de laquelle une image est lisible depuis un œilleton associé (30), un capteur configuré pour mesurer des caractéristiques de l'œil dans l'œilleton associé (30), et un afficheur (14) configuré pour afficher l'image pour l'œilleton associé (30), dans lequel le dispositif monté sur la tête (10) est configuré de telle sorte que l'image affichée soit ajustée de manière à compenser un désalignement des blocs optiques déterminé en comparant un alignement actuel de l'un correspondant des blocs optiques (28) sur la base de caractéristiques de l'œil actuellement mesurées par le capteur (16), avec un alignement initial de l'un correspondant des blocs optiques (28) sur la base des caractéristiques de l'œil précédemment mesurées par le capteur (16).

2. Le dispositif monté sur la tête (10) défini dans la revendication 1 dans lequel le capteur (16) comprend un capteur d'images configuré pour capturer des images de l'œil, dans lequel les caractéristiques de l'œil mesurées sont obtenues à partir des images de l'oeil capturées, et dans lequel l'image affichée est ajustée sur la base des caractéristiques de l'œil à partir des images de l'œil pour compenser le désalignement des blocs optiques.

3. Le dispositif monté sur la tête (10) défini dans la revendication 1 dans lequel le capteur (16) comprend un capteur d'images configuré pour capturer des images de l'œil, et dans lequel les caractéristiques de l'œil mesurées sont obtenues à partir des images de l'œil capturées et incluent l'angle d'ouverture de l'œil et le diamètre de la cornée.

4. Le dispositif monté sur la tête (10) défini dans la revendication 1 dans lequel le capteur (16) comprend un capteur d'images configuré pour mesurer des changements d'alignement des blocs optiques (28) en comparant des informations sur l'œil recueillies lorsque les blocs optiques (28) sont correctement alignés avec des informations sur l'œil recueillies lorsque les blocs optiques (28) sont désalignés.

5. Le dispositif monté sur la tête (10) défini dans la revendication 4 dans lequel l'image affichée est gauchie pour compenser les changements d'alignement mesurés.

6. Le dispositif monté sur la tête (10) défini dans la revendication 4 dans lequel les changements d'alignement mesurés comprennent une rotation de bloc optique en éloignement d'une orientation souhaitée, et dans lequel l'image affichée est gauchie pour compenser la rotation de bloc optique.

7. Le dispositif monté sur la tête (10) défini dans la revendication 6 dans lequel l'image affichée est gauchie pour faire tourner l'image d'une quantité égale et opposée à la rotation de bloc optique en éloignement de l'orientation souhaitée.

8. Le dispositif monté sur la tête (10) défini dans la revendication 1 dans lequel les blocs optiques (28) comprennent chacun une électrode de bloc optique (40) configurée pour venir en contact électrique avec une électrode d'un réseau d'électrodes de capteur de position de bloc optique respectif (42).

9. Le dispositif monté sur la tête (10) défini dans la revendication 8 dans lequel les blocs optiques (28) sont couplés à coulissement à des rails de guidage (50), et dans lequel le dispositif monté sur la tête (10) comprend des positionneurs (52) configurés pour déplacer les blocs optiques (28) de telle manière que les électrodes de bloc optique (40) viennent en contact avec les réseaux d'électrodes de capteur de position (42).

10. Le dispositif monté sur la tête (10) défini dans la revendication 9 dans lequel l'image affichée est ajustée sur la base de mesures provenant des réseaux d'électrodes de capteur de position (42).

11. Le dispositif monté sur la tête (10) défini dans la revendication 1 dans lequel le capteur (16) comprend un capteur d'images, dans lequel les caractéristiques mesurées de l'œil comprennent l'angle d'ouverture de l'œil, et dans lequel l'image affichée est gauchie en utilisant l'angle d'ouverture de l'œil en comparant une version mesurée courante de l'angle d'ouverture de l'œil à une version précédemment mesurée de l'angle d'ouverture de l'œil.

12. Le dispositif monté sur la tête (10) défini dans la revendication 1 comprenant en outre :
une circuiterie de contrôle (12) configurée pour délivrer à l'afficheur (14) des données d'image de l'image ajustée.

13. Le dispositif monté sur la tête (10) défini dans la revendication 1 comprenant en outre :
une circuiterie de contrôle (12) configurée pour ajuster des données d'image correspondant à l'image affichée.

14. Le dispositif monté sur la tête (10) défini dans la revendication 13 dans lequel la circuiterie de contrôle (12) est configurée pour comparer l'alignement courant de l'un correspondant des blocs optiques (28) à l'alignement initial de l'un correspondant des blocs optiques (28) pour déterminer le désalignement des blocs optiques, et dans lequel la circuiterie de contrôle (12) est configurée pour ajuster les données d'image correspondant à l'image affichée afin de compenser le désalignement déterminé des blocs optiques.

15. Le dispositif monté sur la tête (10) défini dans la revendication 1 dans lequel l'afficheur (14) est configuré pour recevoir l'image ajustée afin de l'afficher.
